# EUROPEAN PATENT SPECIFICATION

(11) **EP 0 974 231 B1**
(45) Date of publication and mention of the grant of the patent: **13.11.2002**
(21) Application number: 98915092.5
(22) Date of filing: 03.04.1998
(51) Int. Cl.: H04N 7/34, H04B 17/00

(54) **LINK ADAPTION RELATED TO RADIO**
VERBINDUNGSANPASSUNG BEZOGEN AUF RADIOFUNK
ADAPTATION DE LIAISON RELATIVE A LA RADIO

(30) Priority: 08.04.1997 SE 9701273
(43) Date of publication of application: 26.01.2000
(73) Proprietor: Telia AB (publ), 123 86 Farsta (SE)
(72) Inventor: WINROTH, Mats, Olof, S-135 54 Tyresö (SE)
(74) Representative: Akerman, Marten Lennart
(86) International application number: SE9800614
(87) International publication number: WO98046026

(56) References cited:
- GB-A- 2 297 885
- US-A- 5 070 536

## Description

### FIELD OF THE INVENTION

The present invention relates to a method and an arrangement according to the introduction to claims 1 and 9, respectively.

### PRIOR ART

In order to support 14,4 kbps-services in GSM, is required another channel coding than the one which is used today for, for instance, the 9,6 kbps-service. The increased user data rate will have as a consequence that the coded information contains less redundancy, which will result in worse error characteristic. In the case with the 14,4 kbps-service, which has lower error tolerance, the coverage area will by that be smaller, which results in problems at the radio planning. In order to compensate for this problem, an automatic link adaption has been suggested which, while calls are going on, can change the channel coding from 14,4 kbps to, for instance, 9,6 kbps, which is more tolerant to existing errors. Said adaption is intended to be based on the quality parameter RXQUAL which is a mean value estimation of the bit error ratio, which is graded in 8 steps; is described more in detail below.

A problem at the utilization of RXQUAL is that the mean value is a poor measure of the quality of the radio transmission and that certain important parameters for the quality of the data transmission only has an indirect connection to RXQUAL. US-A-5 070 536 describes a method wherein a qualitative analysis of a received signal is based on the jitter in the signal. A decision to switch from high to low transmission rate is taken upon the total number of errors in a test interval.

The aim with the present invention consequently is to solve this problem.

### SUMMARY OF THE INVENTION

This aim is achieved by a method and an arrangement according to claim 1 respective claim 6.

The invention consequently attends to that, at change of channel coding from/to 14,4 kbps to a more robust channel coding, in addition to RXQUAL also parameters from RLP, which also allow use of information which describes status of the data transmission link and indirectly real data rate, is utilized.

By, besides using RXQUAL, utilizing RLP, the possibilities consequently are increased to trig a change of channel coding at right point of time while a signal communication is going on between transmitting and receiving equipments.

By parameters from RXQUAL and RLP one covers both real data rate and the quality sphere where the link is beginning to get serious problems.

Further characteristics and embodiments are given in the subclaims.

### BRIEF DESCRIPTION OF THE DRAWING

In the following a detailed description is given of an embodiment of the invention with reference to the only drawing.

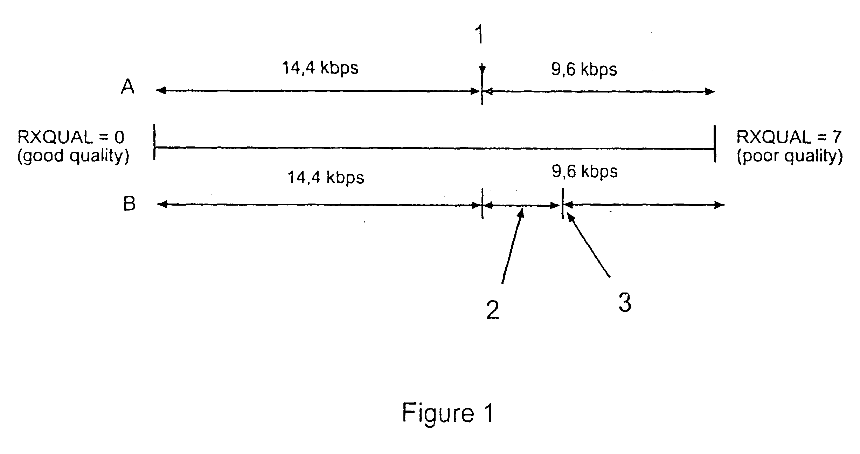

Figure 1 describes two different models for change to a more robust channel coding in case of poor quality of the radio transmission.
1 Here BSC decides that change of channel coding shall be executed.
2 In this area MSC/RLP decides whether change of channel coding shall be executed.
3 Here BSC decides that change of channel coding shall be executed.

### DETAILED DESCRIPTION OF AN EMBODIMENT OF THE INVENTION

Primarily, change of channel coding by means of RXQUAL will be described. After that the solution of the invention which is based on RXQUAL and RPL will be described.

Figure 1 should be paid attention to during the reading. A in Figure 1 relates to a solution where only the RXQUAL-criterion is utilized. It should be noticed that change of channel coding in A on basis of the RXQUAL-criterion is performed at a value of about 4 of the RXQUAL-scale (RXQUAL=0 to RXQUAL=7). B in Figure 1 relates to the solution of the invention with support for RXQUAL and RLP as criteria. It should be noticed that change of channel coding in B on basis of the RXQUAL-criterion is performed at a value of about 5,5 on the RXQUAL-scale, i.e at a considerably worse value than in A.

It should be realized that these values should not be interpreted literally, but only as examples. Suitable limits to decide when change of channel coding shall be made, must be further investigated. However, the principle to utilize limits for change of channel coding is very important.

In order to simplify the reading, the following acronyms will be explained.
- HSCSD:: High Speed Circuit Switched Data
- RXQUAL:: Received signal quality
- RLP:: Radio Link Protocol
- MSC:: Mobile Switching Centre
- BTS:: Base Transceiver System
- BSC:: Base Station Controller
- BER:: Bit Error Ratio
- IWU:: Inter Working Unit

In order to support the 14,4 kbps-service in GSM, another channel coding than the one that now is used for, for instance, the 9,6 kbps-service, is required. The increased user data rate will have as a consequence that the coded information contains less redundance, which results in worse error characteristics. The present data service 9,6 kbps has performance characteristics which fairly corresponds to that of the voice service, i.e. if one can talk, one can almost certainly transmit data. In the case 14,4 kbps, which has lower error tolerance, the coverage area, however, will be smaller, which results in problems at radio network planning. In order to compensate for this problem, an automatic link adaption has been suggested which, while a call is going on, can change the cannel coding from, for instance, 14,4 kbps, which has a weaker channel coding, to the channel coding for, for instance 9,6 kbps, which is more error tolerant. The same procedure is planned for HSCSD.

The link adaption is based on the quality parameter RXQUAL, which MS and BTS measures and forwards to BSC. RXQUAL is an mean value estimation of the bit error rate, BER, during about half a second, and is graded in 8 steps with 0 as the best, and 7 as the worst.

The two big problems with RXQUAL is on one hand the coarse scale, comprising 8 steps, and on the other that RXQUAL and quality does not follow each other for different radio channels.

Only 8 steps give a very coarse picture of the quality of the radio channel. At data transmission in a typical mobile telecommunications channel, at a speed of about 50 km/hour, applies for instance that the data rate is practically unchanged at RXQUAL-values from 0 to 4. Problems will arise only at RXQUAL-values such as 5, 6 and 7.

An hysteresis must be placed to prevent ping-pong-effects from arising and to make sure that the quality really is sufficiently good when one goes from a more robust (lower data rate) to a less robust (higher data rate) channel coding. When the quality value RXQUAL exceeds a level (i.e. the quality becomes poorer) the channel coding consequently is changed to a more robust one. In order to later change to the "faster" channel coding, 14,4 kbps, again another, and lower, RXQUAL is required. The course classification results in that the hysteresis must be set rather high. Since margins are required, it may result in that a mobile stays unnecessary long time on the slower channel coding if it temporarily has landed up in, for instance, a radio black-out area where channel coding has "changed down."

RXQUAL as a mean value is a poor measure of the quality of the radio communication. At the vehice speeds of, for instance, 50 and 3 km/h, fading dips will be of different lengths. At the higher vehicle speed, they will be short, which results in that the interleaving in the coding can spread the errors sufficiently enough to make it possible to correct them. At the lower speed, fading dips, however, are more seldom occurrent, but are so long that the interleaving will not manage to spread the errors sufficiently. In spite of the fact that the data transmission quality will be very different, BER and RXQUAL, however, in average can be the same for the two cases. When frequency jumps are used, these differences are somewhat reduced.

Important parameters which deal with status of the data communication, such as real data rate, buffers and retransmissions of RLP-frames (Radio Link Protocol, HDLC-similar, bitoriented protocol between interworking functions in MS and MSC) only has indirect connection to RXQUAL.

At a classification of RXQUAL which is temporarily poor, it is conceivable that the RLP-connection still is in fair condition. There is in other words a risk that one changes channel coding earlier than what is motivated for transmission reasons, which may imply that one unnecessarily changes channel coding and introduces unnecessary delays in the transmission and load in the network.

The RXQUAL-values, or levels, which are described after this, consist of a filtered value which consists of an averaging of a number of RXQUAL-values, which are measured by BTS and MS about twice a second.

At change of channel coding from 14,4 kbps to a more robust channel coding, also parameters from RLP, in addition to RXQUAL, shall be used. Use of information which describes status of the data transmission link, and indirectly real data rate, can improve the possibilities to, at right point of time, trig a change of channel coding.

BSC, which makes up measuring reports from MS and BTS, checks via RXQUAL radio quality and initiates change of channel coding at poor quality by signalling a request for change of channel coding to MSC. As has previously been described, the measure of quality which is obtained from RXQUAL is fairly uncertain when it comes to judging the quality of the data link. In order to avoid "ping-pong change of channel coding" an hysteresis is introduced. In order to further secure that no channel coding is unnecessarily "changed down", information from RLP can be used.

The first RLP-parameter to be investigated is "Transmission attempts" (or a corresponding timer which runs from the expected time of arrival of a frame, until the frame really arrives correctly). The parameter describes the maximal number of times that an RLP-frame can be retransmitted (or, for instance, the time delay for a still not arrived, expected frame in this scheme) without special measures being taken. It can for instance be mentioned that the default setting of the RLP-parameter N2 of the GSM-specifications is six. This means that if a frame cannot be transmitted or received in the course of six attempts, the RLP-buffers are set to zero or the connection is broken. In order to find out suitable parameter setting to optimize the data rate, simulations are required, but a level of less than 6 frames may be regarded as reasonable.

Another parameter which, in combination with the above, should be used is the total number of retransmissions during a certain period of time. This parameter is strongly connected to real data rate. On the receiving side, a corresponding value can be calculated by checking now many frames that are received correctly, and compare it with the expected number.

With this two parameters one consequently covers both real data rate and the quality domain where the link starts getting serious problems.

In the first place the RLP-parameter criterion is used to "change down", but the RXQUAL-criterion can still be used as the standardized basic solution. The difference, in comparison with the standard solution where BSC decides about change of channel coding, is that now also MSC/IWU can initiate change of channel coding.

At use of the RXQUAL/RLP-criteria, the following apply:

The RXQUAL-criterion is set to a level for lower quality than the RXQUAL-level in a solution without RLP-support. This means that if the quality becomes very poor, the BSC will attend to the change of channel coding (see B in Figure 1).

The RLP-criterion operates between these two RXQUAL-levels (see A, B in Figure 1). MSC decides about change of channel coding.

The information about the state of RLP now is to be found in MS and MSC, but the information in MSC is sufficient, because MSC is the instance which in the normal case initiates and decides about change of channel coding. It should, however, be realized that also MS shall be able to take decision regarding upgrading or downgrading of data rate.

The information about status for RLP is to be found in the IWU and the MSC. This means that information about RLP-status must be conveyed from IWU to MSC. This interface is proprietary, so it need not be standardized.

In a later phase, when we will find more stand alone IWU-functionality, for instance stationed in a GPRS-node, the concept possibly may be necessary to standardize, and that is not impossible because interface between MSC and such a CPRS/IWU-solution still is far from defined. This very day is discussed that an SIWF (Shared Inter Working Function) might be located to a GPRS SN (General Packet Radio Service Node).

If tne change of channel coding has been executed to a more robust channel coding due to poor radio channel, but the channel again will improve, RXQUAL must in the first place be used for trigging of resetting to the higher data rate of the channel coding. A similar procedure as the above can of course also be used here, but because it is not certain that the channel coding of the higher data rate will function well when the more robust channel coding does it, the criterion wil be somewhat weaker in this case. It is, however, likely that some gain would be attained, because the hysteresis between "up- and down changes" of the channel coding probably might be possible to cut down a bit. The less hysteresis, the more optimized data rate.

One advantage of the solution of the invention is that standardization with greatest certainty is not needed to have it implemented. This is due to the fact that the only new signalling that is required is between IWF and MSC, the interface of which is not standardized.

The above mentioned is only to be regarded as an advantageous embodiment of the invention, and the extent of protection of the invention is only defined by the following patent claims.

## Claims

1. Method for use in a wireless, digital radio communications system to, while communication is going on between a transmitting unit and a receiving unit, execute an automatic link adaption which changes the channel coding of the communication to another channel coding to keep up good signal quality and high transmission rate, **characterized in that** at said change of channel coding (B) is utilized on one hand an RXQUAL-criterion, and on the other an RLP-criterion, that a first RLP-parameter aims at investigating transmission attempts, said parameter describing the maximal number of times that an RLP-frame is allowed to be retransmitted without measures being taken, that a second RLP-parameter, in combination with said first RLP-parameter, is used to find out the total number of retransmissions during a certain period of time, said second RLP-parameter being associated to the real data rate, and that, if channel coding has been changed to a low rate, for instance 9,6 kbps, due to a poor radio channel, but the channel again becomes better, the RXQUAL-criterion is utilized for resetting to the higher data rate of the channel coding, for instance 14,4 kbps.

2. Method according to claim 1, **characterized in that** the RXQUAL-criterion is utilized to find out the radio quality in said communication, at which said criterion is the base for the change of the channel coding (B) at poor radio quality, where the radio quality is defined on a scale from RXQUAL=0 for good quality to RXQUAL=7 for poor quality, and that the RLP-criterion relates to status in said communication and data rate in said communication.

3. Method according to claim 2, **characterized in that** if an RLP-frame cannot be transmitted or received during just any selected number of attempts, change of channel coding can be executed.

4. Method according to any of the previous claims, **characterized in that** said RLP-parameters are used to change from high to low data rate.

5. Method according to any of claims 1-4, **characterized in that** said RLP-parameters are used to "change up" from low to high rate.

6. Arrangement including at least a BSC, MS, BTS and MSC/IWU at a wireless, digital, radio communications system to, while a communication is going on between a transmitting unit and a receiving unit, change the channel coding of the communication to another channel coding by automatic link adaption to maintain good signal quality and high communication rate, **characterized in that** said change of channel coding is effected by said BSC on basis of an RXQUAL-criterion or by said MSC/MS on basis of an RLP-criterion, that said MSC/MS decides about change of channel coding on basis of RLP-parameters such as 1) transmission attempts, and 2) total number of retransmissions during a certain period of time, that said BSC, on the basis of said RXQUAL-criterion, is arranged to reset the channel coding to the higher data rate if the radio quality improves.

7. Arrangement according to claim 6, **characterized in that** said BSC which makes up measuring reports from MS and BT, checks, via RXQUAL, the radio quality of said communication, and initiates change of channel coding at poor quality, at which radio quality is defined on a scale from RXQUAL=0 to RXQUAL=7.

8. Arrangement according to claim 7, **characterized in that** said MSC/MS, on the basis of said RLP-parameters, executes change of channel coding from high to low transmission rate.

## Patentansprüche

1. Verfahren zur Verwendung in einem drahtlosen, digitalen Rundfunkkommunikationssystem zum Durchführen einer automatischen Verbindungsanpassung, die die Kanalkodierung einer Kommunikation in eine andere Kanalkodierung ändert, um eine gute Signalqualität und hohe Senderate aufrechtzuerhalten, solange die Kommunikation zwischen einer Sendeeinheit und einer Empfangseinheit erfolgt,
**dadurch gekennzeichnet, daß** die Änderung der Kanalkodierung (B) einerseits als ein RXQUAL-Kriterium verwendet wird und andererseits als ein RLP-Kriterium verwendet wird, daß ein erster RLP-Parameter untersuchende Sendeversuche zum Ziel hat, wobei der Parameter die Maximalanzahl von Malen beschreibt, mit welchen ein RLP-Rahmen rückgesendet werden kann, ohne daß Maßnahmen getroffen werden, daß ein zweiter RLP-Parameter in Kombination mit dem ersten RLP-Parameter verwendet wird, um die Gesamtanzahl der Rückübertragungen während einer gewissen Zeitperiode herauszufinden, wobei der zweite RLP-Parameter der Realdatenrate zugeordnet ist, und daß, wenn die Kanalkodierung infolge eines schwachen Rundfunkkanals auf eine niedrige Rate, beispielsweise 9,6 kbps geändert worden ist, der Kanal aber wieder besser wird, das RXQUAL-Kriterium verwendet wird, um auf die höhere Datenrate der Kanalkodierung, beispielsweise 14,4 kbps, rückzusetzen.

2. Verfahren nach Anspruch 1,
**dadurch gekennzeichnet, daß** das RXQUAL-Kriterium verwendet wird, um die Rundfunkqualität in der Kommunikation herauszufinden, bei der das Kriterium die Basis für die Änderung der Kanalkodierung (B) bei schlechter Rundfunkqualität ist, wobei die Rundfunkqualität auf einer Skala von RXQUAL=0 für gute Qualität bis RXQUAL=7 für schwache Qualität definiert ist, und daß das RLP-Kriterium auf den Status in der Kommunikation bezogen ist.

3. Verfahren nach Anspruch 2,
**dadurch gekennzeichnet, daß**, wenn ein RLP-Rahmen während gerade irgendeiner gewählten Anzahl von Versuchen nicht übertragen oder empfangen werden kann, eine Änderung der Kanalkodierung durchgeführt werden kann.

4. Verfahren nach einem der vorstehenden Ansprüche,
**dadurch gekennzeichnet, daß** die RLP-Parameter verwendet werden, um von der hohen auf die niedrige Datenrate umzuschalten.

5. Verfahren nach einem der Ansprüche 1 bis 4,
**dadurch gekennzeichnet, daß** die RLP-Parameter dazu verwendet werden, von der niedrigen auf die hohe Rate "hochzuschalten".

6. Anordnung mit wenigstens einem BSC, MS, BTS und MSC/IWU bei einem drahtlosen, digitalen Rundfunkkommunikationssystem zum Ändern der Kanalkodierung einer Kommunikation in eine weitere Kanalkodierung durch eine automatische Verbindungsanpassung zur Aufrechterhaltung der guten Signalqualität und der hohen Kommunikationsrate, solange die Kommunikation zwischen einer Sendereinheit und einer Empfangseinheit erfolgt,
**dadurch gekennzeichnet, daß** die Änderung der Kanalkodierung durch die BSC auf der Basis eines RXQUAL-Kriteriums oder durch die MSC/MS auf der Basis eines RLP-Kriteriums durchgeführt wird, daß die MSC/MS über die Änderung der Kanalkodierung auf der Basis von RLP-Parametern beispielsweise nach erstens dem Sendeversuchen und zweitens der Gesamtanzahl der Rückübertragungen während einer bestimmten Zeitperiode entscheidet, und daß die BSC auf der Basis des RXQUAL-Kriteriums angeordnet ist, um die Kanalkodierung auf die höhere Datenrate rückzusetzen, wenn die Rundfunkqualität besser wird.

7. Anordnung nach Anspruch 6,
**dadurch gekennzeichnet, daß** die BSC, die Meßberichte von MS und BT errichtet, über RXQUAL die Rundfunkqualität der Kommunikation überprüft und eine Änderung der Kanalkodierung bei schwacher Qualität iniziiert, wobei die Rundfunkqualität auf einer Skala von RXQUAL=0 bis RXQUAL=7 definiert ist.

8. Anordnung nach Anspruch 7,
**dadurch gekennzeichnet, daß** die MSC/MS auf der Basis der RLP-Parameter die Änderung der Kanalkodierung von der hohen auf die niedrige Senderate durchführt.

## Revendications

1. Procédé utilisable dans un système de communication radio numérique sans fil pour exécuter, pendant qu'une communication est en cours entre une unité d'émission et une unité de réception, une adaptation automatique de liaison qui change le codage de canal de la communication à un autre codage de canal afin de conserver une bonne qualité de signal et un grand débit de transmission,
**caractérisé en ce que**, pour le dit changement de codage de canal (B), on utilise d'une part un critère de qualité de réception RXQUAL et d'autre part un critère de protocole de liaison radio RLP, **en ce qu'**un premier paramètre RLP vise à étudier les tentatives de transmission, le dit paramètre décrivant le nombre maximal de fois où un bloc RLP peut être retransmis sans prendre de mesures, **en ce qu'**on utilise un deuxième paramètre RLP, en combinaison avec le dit premier paramètre RLP, pour trouver le nombre total de retransmissions pendant une certaine durée, le dit deuxième paramètre RLP étant associé au débit de données réel, et **en ce que**, si le codage de canal a été changé à un débit faible, par exemple 9,6 kbps, en raison d'un canal radio médiocre, mais si le canal s'améliore à nouveau, on utilise le critère RXQUAL pour revenir au débit de données plus élevé du codage de canal, par exemple 14,4 kbps.

2. Procédé selon la revendication 1, **caractérisé en ce qu'**on utilise le critère RXQUAL pour déterminer la qualité radio dans la dite communication, dont le dit critère est la base pour le changement du codage de canal (B) dans le cas de mauvaise qualité radio, la qualité radio étant définie sur une échelle allant de RXQUAL = 0 pour une bonne qualité à RXQUAL = 7 pour une mauvaise qualité, et **en ce que** le critère RLP concerne un état dans la dite communication et un débit de données dans la dite communication.

3. Procédé selon la revendication 2, **caractérisé en ce que**, si un bloc RLP ne peut pas être émis ou reçu pendant juste un nombre choisi quelconque de tentatives, on peut exécuter un changement de codage de canal.

4. Procédé selon une quelconque des revendications précédentes, **caractérisé en ce qu'**on utilise les dits paramètres RLP pour changer d'un débit de données élevé à un débit de données faible.

5. Procédé selon une quelconque des revendications 1 à 4, **caractérisé en ce qu'**on utilise les dits paramètres RLP pour "monter" d'un débit faible à un débit élevé.

6. Agencement incluant au moins une unité de commande de station de base BSC, un centre de commutation de mobiles MS, un système d'émission-réception de base BTS et un centre de commutation de mobiles / unité d'interconnexion MSCC / IWU dans un système de communication radio numérique sans fil pour changer, pendant qu'une communication est en cours entre une unité d'émission et une unité de réception, le codage de canal de la communication à un autre codage de canal par adaptation automatique de la liaison afin de conserver une bonne qualité de signal et un grand débit de communication, **caractérisé en ce que** le dit changement de codage de canal est effectué par le dit BSC sur la base d'un critère RXQUAL ou par le dit MSC / MS sur la base d'un critère RLP, **en ce que** le dit MSC /MS décide du changement de codage de canal sur la base de paramètres RLP tels que (1) les tentatives de transmission et (2) le nombre total de retransmissions pendant une certaine durée, et **en ce que** le dit BSC, sur la base du dit critère RXQUAL, est prévu pour rétablir le codage de canal au débit de données le plus élevé si la qualité radio s'améliore.

7. Agencement selon la revendication 6, **caractérisé en ce que** le dit BSC, qui produit des indications de mesure à partir de MS et BT, vérifie via RXQUAL la qualité radio de la dite communication et déclenche un changement de codage de canal lorsque la qualité est mauvaise, la qualité radio étant définie sur une échelle allant de RXQUAL = 0 à RXQUAL=7.

8. Agencement selon la revendication 7, **caractérisé en ce que** le dit MSC / MS, sur la base des dits paramètres RLP, exécute le changement de codage de canal, du débit élevé de transmission au faible débit de transmission.
